(19) Europäisches Patentamt
European Patent Office
Office européen des brevets

(11) Veröffentlichungsnummer: **0 222 247**
**A2**

(12) **EUROPÄISCHE PATENTANMELDUNG**

(21) Anmeldenummer: **86114921.9**

(22) Anmeldetag: **27.10.86**

(51) Int. Cl.[4]: **C08L 71/04**, C08L 25/12, C08L 53/00

(30) Priorität: **12.11.85 DE 3540046**

(43) Veröffentlichungstag der Anmeldung: **20.05.87 Patentblatt 87/21**

(84) Benannte Vertragsstaaten: **BE DE FR GB NL**

(71) Anmelder: **BASF Aktiengesellschaft**
**Carl-Bosch-Strasse 38**
**D-6700 Ludwigshafen(DE)**

(72) Erfinder: **Taubitz, Christof, Dr.**
**In der Dreispitz 15**
**D-6706 Wachenheim(DE)**
Erfinder: **Hambrecht, Juergen, Dr.**
**Am Klosterwald 31**
**D-4400 Muenster-Hiltrup(DE)**
Erfinder: **Bronstert, Klaus, Dr.**
**Gartenstrasse 26**
**D-6719 Carlsberg(DE)**
Erfinder: **Walter, Hans-Michael, Dr.**
**Im Haagweg 6**
**D-6701 Ruppertsberg(DE)**
Erfinder: **Illers, Karl Heinz, Dr.**
**Huttenstrasse 20**
**D-6701 Otterstadt(DE)**
Erfinder: **Heckmann, Walter, Dr.**
**Geiersbergstrasse 2**
**D-6940 Weinheim(DE)**

(54) **Thermoplastische Formmasse aus Polyphenylenethern, Styrol-Acrylnitril-Copolymerisaten und Lactonblockcopolymerisaten.**

(57) Die Erfindung betrifft eine thermoplastische Formmasse enthaltend

A 10 bis 90 Gew.-Teile mindestens eines Polyphenylenethers,

B 90 bis 10 Gew.-Teile mindestens eines Styrol und Acrylnitril enthaltenden Copolymerisates,

enthaltend ferner, bezogen auf 100 Gew.-Teile aus A + B C 1 bis 50 Gew.-Teile mindestens einer weiteren Komponente, dadurch gekennzeichnet, daß die weitere Komponente C ein Copolymerisat der allgemeinen Formel

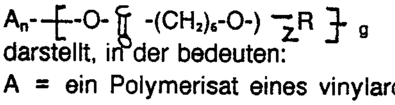

darstellt, in der bedeuten:

A = ein Polymerisat eines vinylaromatischen Monomeren aus der Gruppe von Styrol, den kernalkylierten Styrol, den Seitenkettenalkylierten Styrolen oder Gemischen davon

n = Zahlenwerte von n = 5 bis 5000 (Polymerisationsgrad)

g = ganze Zahlen von 1 bis 4

Z = 10 bis 5000

R = Wasserstoff, Alkyl oder Acyl.

Die Formmassen wird zur Herstellung von Formteilen verwendet.

EP 0 222 247 A2

# Thermoplastische Formmasse aus Polyphenylenethern, Styrol-Acrylnitril-Copolymerisaten und Lacton-blockcopolymerisaten

Die Erfindung betrifft eine thermoplastische Formmasse auf der Grundlage von Polyphenylenethern und Styrol-Acrylnitril-Copolymerisaten, die eine weitere Komponente enthalten.

Zum Stand der Technik nennen wir

(1) US-PS 4 360 618 und

(2) US-PS 4 387 189.

Thermoplastische Formmassen, die Styrolpolymerisate und Polyphenylenether enthalten, sind z.B. aus den US-PSen 3 383 435, 4 128 602 sowie 4 128 603 bekannt. Solche Formmassen eignen sich zur Herstellung von Formteilen die im Vergleich zu solchen Formteilen, die nur das Styrolpolymerisat, aber nicht Polyphenylenether enthalten, eine bessere Wärmeformbeständigkeit haben, Formmassen, die Polyphenylenether und Styrol-Acrylnitril-Copolymerisate, die ASA oder ABS-Polymerisate enthalten, haben sich bislang nicht eingeführt, da aufgrund von mangelnder Verträglichkeit mit en Mischungspartnern die Eigenschaften der Formkörper weit unter den erwarteten Werten liegen.

Es ist daher in (1) vorgeschlagen worden, Styrolpolymerisate, die lediglich 2 bis 8 Gew.% Acrylnitril einpolymerisiert enthalten, zur Herstellung von Formteilen zu verwenden. Doch zeigt sich, daß schon bei höheren Acrylnitrilgehalten, die über 8,5 % liegen, eine Unverträglichkeit mit dem Polyphenylenether auftritt, so daß Formkörper mit schlechten mechanischen Werten aus derartigen Mischungen erhalten werden.

In (2) wird vorgeschlagen, den Styrolpolymerisate, z.B. Styrolcopolymerisate mit Acrylnitri, die Säure-, Säureanhydrid-oder Säurechloridgruppen enthalten, mit den endständigen, OH-Gruppen von Polyphenylenethern umzusetzen. Derartige Umsetzungsprodukte können mit Styrolpolymerisaten und Polyphenylenethern gemischt werden, wobei aus derartigen Formmassen Formkörper mit verbesserten mechanischen Eigenschaften hergestellt werden können. Es zeigte sich jedoch, daß derartige Formmassen noch nicht voll befriedigen.

Der vorliegenden Erfindung liegt daher die Aufgabe zugrunde, thermoplastische Formmassen auf der Grundlage von Styrol-Acrylnitril-Copolymerisaten und von Polyphenylenethern zu schaffen, die zu Formteilen mit guten mechanischen Eigenshaften verarbeitet werden können.

Diese Aufgabe wird gelöst durch eine Formmasse gemäß Anspruch 1.

Thermoplastische Formmasse enthaltend

A 10 bis 90 Gew.-Teile mindestens eines Polyphenylenethers,

B 90 bis 10 Gew.-Teile mindrestens eines Styrol-und Acrylnitril-enthaltenden Copolymerisates, enthaltend ferner, bezpgen auf 100 Gew.-Teile aus A + B

C 1 bis 50 Gew.-Teile mindestens einer weiteren Komponente, dadurch gekennzeichnet, daß die weitere Komponente C ein Copolymerisat der allgemeinen Formel

$$A_n\left[-O-\left(-\overset{\displaystyle O}{\overset{\|}{C}}-(CH_2)_6-O-\right)_Z R\right]_g$$

darstellt, in der bedeuten:

A = ein Block(co)polymerisat eines vinylaromatischen Monomeren aus der Gruppe von Styrol, den kernalkylierten Styrolen, den Seitenkettenalkylierten Styrolen oder Gemischen davon

n = Zahlenwerte von n = 5 bis 5000 (Polymerisationsgrad)

g = ganze Zahlen von 1 bis 4

Z = 10 bis 5000

R = Wasserstoff, Alkyl oder Acyl.

Nachstehend werden der aufbau der erfindungsgemäßen Formmasse aus den Komponenten, die Herstellung der Komponenten und die der Formmasse beschrieben.

Die erfindungsgemäße Formmasse enthält die Komponenten A, B und C, vorzugsweise besteht sie aus diesen. Darüber hinaus kann sie noch die Komponente D und Zusatzstoffe E aufweisen.

Im einzelnen ist die Formmasse aufgebaut aus folgenden Anteilen:

A: 10 bis 90 Gew.-Teilen, vorzugsweise A 20 bis 80 Gew.-Teilen

B: 90 bis 10 Gew.-Teilen, vorzugsweise 80 bis 20 Gew.-Teilen und, bezogen auf 100 Gew.-Teile A + B

C: 1 bis 50 Gew.-Teilen, vorzugsweise 5 bis 20 Gew.-Teilen

D: 0 bis 30 Gew.-Teilen, vorzugsweise 5 bis 20 Gew.-Teilen

E: 0 bis 40 Gew.-Teilen, vorzugsweise 0 bis 30 Gew.-Teilen

Bevorzugte Formmassen bestehen aus folgenden Anteilen:

A: 10 bis 90 Gew.% mit Polystyrol zumindestens teilweise mischbaren Polyphenylenether, vorzugsweise Poly(2,6-dimethyl-1,4-phenylen)oxid,

B: 90 bis 10 Gew.% Styrol-Acrylnitril-Polymeren bestehend aus 92 bis 60 % Styrol
8 bis 40 % Acrylnitril und gegebenenfalls
0 bis 20 % weiteren, copolymerisierbaren Monomeren und, bezogen auf 100 Teile A + B,

C: 1 bis 50 Gew.-Teilen Polystyrol-Polycaprolacton-Blockcopolymeren, bestehend aus Block-Einheiten von
20 bis 80 Gew.% Styrol
80 bis 20 Gew.% Caprolacton und gegebenenfalls
0 bis 20 Gew.% weiteren, copolymerisierbaren Monomeren

D: 0 bis 30 Gew.-Teilen eines schlagzähmodifizierenden Kautschuks und

E: gegebenenfalls weiteren Zusatzstoffen, wobei das Blockpolymere C mit einem speziellen polymeren Initiator, aus hydroxylgruppenhaltigem Polystyrol mit nur einer OH-Endgruppe und metallorganischen Verbindungen in Gegenwart von ε-Caprolactam hergestellt worden ist.

Unter thermoplastischen Formmassen im Sinne der vorliegenden Erfindung sollen Mischungen verstanden werden, die sich durch thermoplastischee Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Die in der thermoplastischen Formmasse enthaltenen Komponenten sind wie folgt zu beschreiben.

Komponente A:

Die in den thermoplastischen Formmassen als Komponente A enthaltenen Polyphenylenether werden nach bekannten Verfahren aus in ortho-Position disubstituierten Phenolen durch oxidative Kupplung hergestellt. Dabei sollen mindestens 20 Einheiten miteinander vekrnüpft sein.

Beispielhaft seien genannt: Poly(2,5-dilauryl-1,4-phenylen)oxid, Poly(diphenyl-1,4-phenylen)oxid,. Poly-(2,6-dimethyloxy-1,4-phenylen)oxid, Poly(2,6-diethoxy-1,4-polyphenylen)oxid, Poly(2-methoxy-6-ethoxy-1,4-phenylen)oxid, Poly(2-ethyl-6-stearyloxy-1,4-phenylen)oxid, Poly(2,6-dichlor-1,4-phenylen)oxid, Poly(2-methyl-6-phenyl-1,4-phenylen)oxid, Poly(2,6-dibenzyl-1, 4-phenylen)oxid, Poly(2-ethoxy-1,4-phenylen)oxid, Poly(2-chlor-1,4-phenylenoxid), Poly(2,5-dibrom-1, 4-phenylen)oxid. Ebenfalls geeignet sind Copolymere von verschiedenen Phenolen, wie 2,6-Dimethyl-phenol und 2,3,6-Trimethylphenol.

Bevorzugt für die erfindungsgemäßen Abmischungen sind solche, bei denen die Substituenten Alkyle mit bis 4 C-Atomen sind, wie Poly(2,6-dimethyl-1,4-phenylen)oxid, Poly(2,6-diethyl-1,4-phenylen)oxid, Poly-(2-methyl-6-ethyl-1,4-polyphenylen)oxid, Poly(2-methyl-6-propyl-1,4-poly-phenylenoxid, Poly(2,6-dipropyl-1,4-phenylen)oxid und Poly(2-ethyl-6-propyl-1,4-phenylen)oxid.

Besonders bevorzugte Polyphelyenether sind solche, die mit Polystyrol teilweise mischbar oder vollkommen mischbar sind. Die Polymermischungen enthalten im besonderen Poly(2,6-dimethyl-1,4-phenylen)oxid.

Sie weisen intrinsische Viskositäten oder Grenzviskositäten von [η] = 0, 18 bis 0,8 [dl/gl] auf, bestimmt an Lösungen des Polymeren in $CHCl_3$ bei 25°C.

Die Komponente A kann teilweise, z.B. bis zu 50 Gew %, durch Polystyrol oder schlagfestes Polystyrol (HIPS) ersetzt sein. Solche Abmischungen aus Poly(2,6-dimethyl-1,4-phenylen)oxid und Polystyrol oder HIPS sind dem Fachmann bekannt.

Komponnente B

Die erfindungsgemäße Formmasse enthält als Komponente B mindestens ein Styrol-und Acrylnitril enthaltendes Copolymerisat.

Unter Styrol-Acrylnitril enthaltenden Copolymerisaten sollen im Rahmen dieser Erfindung sogenannte SAN-, ABS-und ASA-Polymerisate verstanden werden. SAN-Polymerisate sind Copolymerisate aus monovinylaromatischen Monomeren und Nitrilmonomeren. Die vinylaromatischen Monomeren können Styrol oder auch alpha-Methylstyrol, p-Methylstyrol, Halogenstyrole wie Chlorstyrol oder ortho-Ethylstyrol oder Gemische dieser Monomeren sein. Bevorzugt ist jedoch ausschließlich Styrol. Von den Nitrilmonomeren, die in dem SAN-Polymerisat in Mengen von 8 bis 40 Gew.%, vorzugsweise 8 bis 28 Gew.% einpolymerisiert sind, kommt vor allem Acrylnitril in Frage. Die SAN-Polymerisate können außer den genannten

Monomeren noch bis zu 20 % weitere Monomeren wie Methacrylsäureester, Acrylsäureester, z.B. Methylmethacrylat oder Ethylmethacrylat aber auch Butylacrylat oder 2-Ethylhexylacrylat sowie Methylacrylamide oder Acrylamide aber auch Acrylsäure, Maleinsäureanhydrid oder Gemische dieser Verbindungen einpolymerisiert enthalten. Bevorzugt sind jedoch die SAN-Polymerisate, die lediglich Styrol-und Acrylnitril-Monomeren einpolymerisiert enthalten. Die genannten SAN-Copolymerisate sind im Handel erhältlich und sollen einen Molekulargewichtsbereich von $\overline{M}_w$ = 500 bis $2{,}5 \bullet 10^6$ (Gewichtsmittel aus GPC) aufweisen.

Zu den Styrol-Acrylnitril-Copolymerisaten rechnet man im Sinne der vorliegenden Erfindung auch die sogenannten sogenannten ABS-Polymerisate, die eine Weichkomponente aus mit Styrol und Acrylnitril gepfropften Butadienpolymerisation enthalten. Deren Zusammensetzung beträgt

i.w. Styrol von 45 bis 75 Gew.%

AN von 20 bis 35 Gew %

PBu von 5 bis 20 Gew.%

Die Weichkomponente kann auch aus gepfropften EPDM oder einem Polypentamerkautschuk bestehen. Die ASA-Polymerisate z.B. enthalten einen gepfropften Acrylat-Kautschuk. ABS-bzw. ASA-Polymerisate sind bekannt. Sie sind z.B. in dem Buch C.B. Buchnakll "toughened Plastics", Applied Science Publ., London - (1977), S. 66 bis 105) beschrieben.

Die ABS-und ASA-Polymerisate können nach den verschiedensten Verfahren, z.B. auch durch Mehrstufenpfropfung, erhalten werden. Die Pfropfhüllen können auch andere Monomere als Styrol und Acrylnitril enthalten; z.B. seien Methylmethacrylat, Acrylate, Methacrylnitril, Acrylsäure und Methacrylsäure genannt. Die Pfropfkautschuke sind auf verschiedenster Art zugänglich; sie können z.B. durch Lösungs-, Block-oder Emulsionspolymerisation erhalten werden.

Komponente C

Die Komponente C kann als ein Copolymerisat der allgemeinen Formel

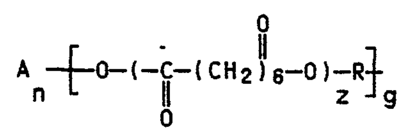

dargestellt werden, in der bedeuten:

A = ein Block(co)polymerisat mindestens eines vinylaromatischen Monomeren aus der Gruppe von Styrol, den kernalkylierten Styrolen, den Seitenketten-alkylierten Styrolen oder Gemischen davon

n = Zahlenwerte von n = 5 bis 5000 (Polymerisationsgrad)

g = ganze Zahlen von 1 bis 4, insbesondere 1

z = 10 bis 5000, vorzugsweise von 100 bis 1000

R = Wasserstoff, Alkyl oder Acyl.

Die Komponente C ist vorzugsweise ein Polystyrol-Poly-ε-caprolacton-Blockcopolymeres (Ps-b-PCL) vom A-B-Typ.

Es besteht vorzugsweise aus einem Polystyrol-Block ($A_n$ ) und einen Polycaprolacton-Block ($B_z$). In den beiden Blöcken können bis zu 20 Gew.% weitere, copolymerisierbare Monomere enthalten sein. Die Blockpolymeren enthalten vorzugsweise 20 bis 80 Gew.%, besonders bevorzugt 35 bis 65 % Styrol, als vinylaromatische Monomere einpolymerisiert (Rest ε-Caprolacton).

Sie werden nach einem besonderen Verfahren hergestellt, das in der prioritätsgleichen deutschen Patentanmeldung P .......... ausführlicher beschrieben ist. Allgemein wird das Blockcopolymerisat C hergestellt durch Umsetzen von mindestens einem Hydroxylgruppen-haltigen Block(co)-polymerisat a), $A_n(OH)_g$ mit einer metallorganischen Verbindung b) der allgemeinen Formel

$R^1_l R^2_m R^3_p MeX_y$

wobei

$R^1$, $R^2$ und $R^3$ gleich oder verschieden sein können und jeweils stehen für Alkyl-, Cycloalkyl-, Alkenyl-, Cycloalkenyl-, Aryl-Reste mit 1 bis 12 C-Atomen oder Kombinationen der vorstehenden Reste untereinander. Me für $Mg^{2+}$, $Zn^{2+}$ oder $Al^{3+}$ und wobei die Laufzahlen 1, m und p jeweils 0 oder 1 sein können und ferner gilt Σ 1 + m + p = 1, 2 oder 3

X für Chlor oder Brom und y = 0, 1 oder 2 sein kann,

in Gegenwart eines inerten Lösungsmittels bei Temperaturen von -20°C bis 120°C und Verweilzeiten von 1 Minute bis 5 Stunden unter an sich bekannten Scherbedingungen (Rühren) in Gegenwart von Inertgasen in einem Molverhältnis, bezogen auf die OH-Gruppen von a) ($A_{OH}$)b) von 1:1 bis 3:1 und unter anschließender Polymerisation von ε-Caprolacton in Gegenwart des Umsetzungsproduktes (Polymerisationsinitiators) aus a) und b). [Bedeutung von A wie Komp. C; g = Zahlenwerte 1 bis 4.]

Man verwendet vorzugsweise ein eine terminale Hydroxylgruppe aufweisendes Polystyrol. Dazu wird daher das Polystyrol in bekannter Weise anionisch unter Verwendung von sek.-Butyllithium hergestellt und das lebende Anion mit Hilfe von Ethylenoxid terminiert.

Das Polystyrol kann weitere Monomere in Mengen unter 20 Gew.% enthalten, die die Herstellung des Polycaprolacton-Blocks nicht stören, wie Isopren und Butadien. Das Molgewicht des Polystyrol-Polymeren beträgt 500 bis 500.000, im besonderen 10,000 bis 150,000.

Bevorzugt werden zur Herstellung des polymeren Initiators als metallorganische Verbindung Methylmagnesiumchlorid, Triisobutylaluminium, Ethyl-aluminiumdichlorid oder Diethyl-zind verwendet, besonders bevorzugt wird Diethyl-zink.

Der polymere Initiator kann direkt in Lösung mit Lactonmonomeren, insbesondere ε-Caprolacton umgesetzt werden, welches an das Polystyrol anpolymerisiert und das spezielle Blockcopolymere bildet der allgemeinen Formel

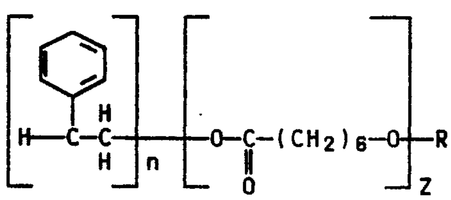

mit

n = 5 bis 5000

Z = 10 bis 5000, vorzugsweise 100 bis 1000

R = Wasserstoff, Alkyl oder Acryl

Das Molekulargewicht des Polycaprolacton-Blocks beträgt vorzugsweise 3.000 bis 200.000, im besonderen von 10.000 bis 150.000. Der Polycaprolacton-Block kann bis zu 20 Gew.% weitere, copolymerisierbare Lactone enthalten, wie β-Propionlacton.

Komponente D

Zusätzlich zu den in der Komponente B gegebenenfalls vorhandenen, gepfropften Kautschuken, wie Polybutadien-Kautschuk, acrylat-Kautschuk, Styrol-Butadien-Kautschuk, Polybuten-Kautschuk, hydrierten Styrol-Butadien-Kautschuk Acrylnitril-Butadien-Kautschuk, Ethylen-Propylen-Kaut-schuk, Polyisopren-Kautschuk können die ungepfropften Kautschuke als Komponente D zugesetzt werden. Als Kautschuk D seien weiter erwähnt styrolgepfropfte Ethylen-Propylen-Kautschuke, thermoplstische Polyester-Elastomere, Ethylenkautschuke und Ionomere, Styrol-Butadien-Blockcopolymere einschließlich AB-, ABA-, ABA-verschmiert(taper)-, Stern-Blöcke und ähnliche, analoge Isopren-Blockcopolymerisate, auch (teil)hydrierte Blockpolymere.

Die genannten Kautschuke sind im Handel erhältlich.

Komponente E

Darüber hinaus können die erfindungsgemäßen Formmassen als Komponente E enthalten, Thermoplaste wie Polystyrol, Polycaprolacton, PVC oder Zusatzstoffe, Hitze-und Lichtstabilisatoren, Gleit-und Entformungsmittel, Färbemittel, wie Farbstoffe und Pigmente, in üblichen Mengen.

Geeignete Zusatzstoffe sind auch Verstärkungsmittel, wie Glasfasern, Wollastonit, Talkum, Kreide, Zinksulfid, Gipsfasern, synthetische Calciumsilikate, Kaolin, calciniertes Kaolin, in Mengen bis zu 50 Gew.%, vorzugsweise bis zu 30 Gew.%, bezogen auf die thermoplastische Formmasse, ferner Phosphorverbindungen, wie Phosphate, Phosphorsäureester, Phosphorigsäureester, Phosphinsäureester, Phosphonigsäureester oder organische Phosphinoxide.

Die erfindungsgemäßen thermoplastischen Formmassen erhält man zweckmäßig durch Mischen der Einzelkomponenten bei Temperaturen von 230 bis 320°C in üblichen Mischvorrichtungen, wie Extrudern oder Knetern. Vorteilhaft werden zunächst die Komponenten B und C gemischt und anschließend dieses Gemisch mit der Komponente A gemischt. Falls ein Teil der Komponente A durch Styrolpolymerisate ersetzt ist, ist es vorteilhaft, die Polyphenylenether mit Styrol-Polymerisaten vorzumischen und dieses Gemisch dann mit einem Gemisch aus den Komponenten B und C in der Schmelze zu mischen.

Die erfindungsgemäßen Mischungen zeichnen sich durch gute mechanische Eigenschaften aus. Besonders bei Acrylnitril-Gehalten über 15 Gew.% im Styrol-Acrylnitrilcopolymeren (Komponente B) haben die erfindungsgemäßen Mischen überraschend hohe mechanische Werte gegenüber Mischungen, die kein Lacton-Blockcopolymeres enthalten.

Besonders Zugfestigkeit und Kerbschlagzähigkeit zeigen außerordentlich bemerkenswerte Verbesserungen gegenüber den Abmischungen ohne Lactoncopolymeres C. Überraschend ist der geringe Anteil an Lactonblockcopolymeren C, der zugesetzt werden muß. Dies ist besonders vorteilhaft, da die Hauptbestandteile der erfindungsgemäßen Abmischung aus handelsüblichen Polyphenylenethern und ABS-oder SAN-Polymeren bestehen können. Durch den hohen Acrylnitrilgehalt, der bei den erfindungsgemäßen Einstellungen verwendet werden kann, ist eine verbesserte Lösungsmittelbeständigkeit gegenüber Abmischungen aus Polyphenylenethern und mit Polystyrol offensichtlich.

Die in den Beispielen und Vergleichsversuche beschriebenen Parameter wurden wie folgt bestimmt:

1. Kerbschlagzähigkeit $a_K$ in kJ/m² nach DIN 53 453
2. Zugfestigkeit, bei Bruch in N/mm² nach DIN 53 455
3. Vicattemperatur VT in °C nach DIN 53 460

Zur Herstellung erfindungsgemäßer Formmassen und von Vergleichsproben werden die nachfolgend beschriebenen Produkte A, $B_{1-4}$, $C_{1-2}$ und E verwendet. Dabei handelt es sich im einzelnen um:

A: Poly(2,6-dimethyl-1,4-phenylen)oxid (relativ. Viskosität = 0,56, gemessen bei 25°C in Chloroform)

$B_1$: Poly-SAN-Copolymer, bestehend aus 75 Gew.% Styrol und 25 Gew.% Acrylnitril, mit einer VZ = 85, hergestellt durch kontinuierliche Polymerisation

$B_2$: Poly-SAN-Copolymer, bestehend aus 81 Gew.% Styrol und 19 Gew.% Acrylnitril, mit einer VZ = 100, hergestellt wie $B_1$

$B_3$: ABS-Copolymer, hergestellt durch Emulsionspolymerisation von 60 Teilen Polybutadien, gefolgt von 40 Teilen SAN (AN-Gehalt 25 %), 45 Teile der gefällten Dispersion werden mit 55 Teilen eines Poly-SAN-Copolymeren $B_1$ abgemischt und ergeben $B_3$.

$B_4$: ABS-Lösungspolymerisat, DOW ABS 213, bestehend aus 70 Gew.% Styrol, 22 % Acrylnitril, 8 % Butadien.

$C_1$: In einem dreistufigen Verfahren wurde ein Lacton-Blockcopolymer mit einem ersten Block aus Homo-Polystyrol und einem zweiten Block aus Homo-poly-$\epsilon$-caprolacton hergestellt, wobei die Styrolpolymerisation mit sec.-Butyllithium initiiert wurde. Das resultierende Polystyrollithium wurde mit Ethylenoxid, Chlorwasserstoff und Diethylzink modifiziert und als polymerer Initiator für die $\epsilon$-Caprolacton-Polymerisation eingesetzt.

Rezeptur

Stufe 1 - Styrol-Polymerisation

| | |
|---|---|
| Toluol, g | 1566 |
| Styrol, g | 190 |
| s-Butyllhithium, mol | 3,1 |
| Temperatur, °C | 50 |
| Zeit, h | 1 |

Stufe 2 - Modifizierung des Polystyrol-Lihtium

| | |
|---|---|
| Ethylenoxid, mmol | 3,0 |
| Chlorwasserstoff, mmol | 3,0 |
| Diethylzink, mmol | 1,5 |
| Temperatur, °C | 20 |
| Zeit, min | 75 |

Stufe 3 - ε-Caprolacton-Polymerisation

| | |
|---|---|
| ε-Caprolcton, g | 268 |
| Temperatur, °C | 20 |
| Zeit, min | 30 |

Zuerst wurde der Rektor mit Stickstoff gespült. Anschließend wurden Toluol und Styrol eingefüllt und schließlich das Butyllithium hinzugefügt. Die Polymerisationstempertur wurde auf 50°C eingestellt. Nach einer Stunde war die Polymerisation des Styrols im wesentlichen beendet.

Die Reaktionsmischung wurde auf Raumtemperatur abgekühlt und mit Ethylenoxid, dann mit Chlorwasserstoff und schließlich mit Diethylzink versetzt. Die Zugabe von Ethylenoxid und Diethylzink erfolgte in Form einer 0,1 M Lösung in Toluol. Der Kohlenwasserstoff wurde mit Hilfe einer Gasbürette dosiert. Zur Vervollständigung der Umsetzungen wurde nach jeder Zugabe 25 min gewartet. So dann wurde eine Probe von 100 ml entnommen.

Schließlich wurde das ε-Caaprolacton zur Reaktionsmischung gegeben. Bei einer Temperatur von 20°C wurde 30 min polymerisiert.

Die Reaktion wurde durch Zugabe einer 10 %igen Essigsäure (10 g) abgestoppt und die Mischung nach 1 Std. gerührt. Das Blockcopolymerisat sowie die Polystyrolprobe werden mit Petrolether ausgefällt, gewaschen und zuletzt getrocknet.

Zur Charakterisierung des Polymerisats wurde die Polymer-Ausbeute bestimmt, eine Prüfscheibe von 6 cm Durchmesser und 1 bis 2 mm Dicke gepreßt, sowie ein Gelpermeationschromatographisches Elutions-Diagramm (GPC-Elutionsdiagramm) aufgenommen.

Die Polymerausbeute war größer als 98 % bezüglich des Gesamt-Monomereinsatz.

Die Prüfscheibe zeichnet sich durch hohe mechanische Festigkeit und im durchscheinenden Licht durch gute Homogenität aus. Dies sind beides Eigenschaften, die nur dann vorhanden sind, wenn hohe Anteile an Blockcopolymer und niedrige Anteile an Homopolymer vorhanden sind.

Das GPC-Elutionsdiagramm wurde unter folgenden Bedingungen aufgenommen:

| | |
|---|---|
| Lösungsmittel: | THF |
| Temperatur: | 23°C |
| Durchflußgeschwindigkeit: | 1,5 ml/min |
| Injektion: | 160 Mikroliter einer 0,125 %igen |
| Lösung | |

Trennsäulen:

| Nr. | Säule i.D. mm | Länge cm | Trennmaterial | Trennbereich in Einheiten M (Polystyrol) |
|---|---|---|---|---|
| 1 | 6 | 30 | Lichrospher S.I. 500 | 10.000 - 600.000 |
| 2 | 6 | 30 | Lichrospher S.I. 500 | 10.000 - 600.000 |
| 3 | 6 | 30 | Lichrospher S.I. 1000 | 41.000 - 2.000.000 |
| 4 | 6 | 30 | Lichrospher S.I. 1000 | 40.000 - 2.000.000 |

Dedektor: Knauerer-Dual-Dedektor (Differentialrefraktometer und Einlinien-UV-Photometer (254 nm) in einer Kürette)
Eichung: mit eng Verteilten Fraktionen von Polystyrol
Auswertgrenze: bei M (Polystyrol) ca. 3000; darunter keine Aussage möglich.

Zur Beurteilung des Polymerisats mittels GPC wurden zwei Elutionsdiagramme aufgenommen und verglichen: Das der Polystyrol-Probe und des Blockcopolymerisats, wobei die Polystyrol-Probe exaakt den Polystyrol-Block des Blockcopolymerisats repräsentiert. Das Peakmaximum im GPC-Elutionsdiagramm des Polystyrol-Blocks lag bei einer Molmasse von 60.000. Dagegen zeigt das GPC-Elutionsdiagramm des Lacton-Blockcopolymers im wesentlichen einen Peak mit dem Maximum bei einer Molmasse von 185.000. Ein Flächenvergleich der UV-Peaks der Polystyrol-Probe und des Lcton-Blockcopolymers bestätigt einen Styrol-Anteil von 40 Gew.%, bezogen auf das im Lacton-Blockcopolymer.

$C_2$: Es wurde, wie unter $C_1$ beschrieben verfahren, mit der Ausnahme, daß unterschiedliche Monomermengen eingesetzt wurden:
Es wurden 280 g Styrol und 179 g $\epsilon$-Caprolacton eingesetzt.
Die Molmasse des Polystyrol-Blocks lag bei 95.000, die Molmasse des $\epsilon$-Caprolacton-Blockcopolymers bei 175.000. Mit Hilfe des Flächenvergleichs der UV-Peaks wurde ein Styrol-anteil von 62 Gew.%, bezogen auf das Lacton-Blockcopolymer bestätigt.

$D_1$: Butadienkautschuk, hergestellt durch Emulsionspolymerisation von 70 Teilen eines Butadien/Styrol-Gemisches (90/10) in der ersten Stufe, 10 Teilen Styrol in der zweiten Stufe und 20 Teilen Methylmethacrylat in der dritten Stufe.

$D_2$: Kraton G 1650 ein handelsübliches lineres Blockpolymer (ABA) vom PS-Butadien(hydriert)-PS-Typ mit 30 % Styrol.

E: Schlagfestes Polystyrol (HIPS) mit 8 % Polybutadien mit einem Molekulargewicht von 150.000.

Die Erfindung wird nachstehend anhand von Beispielen und Vergleichsversuchen näher erläutert. Alle darin angegebenen Teile und Prozente beziehen sich, sofern nichts anderes vermerkt ist, auf das Gewicht.

Beispiel 1 bis 10 und Vergleichsversuche I bis IV

Die in der Tabelle genannten Mengen an Produkten A, $B_n$, $C_n$, $D_n$ und E wurden in einem Zweischneckenextruder bei 270°C hergestellt.

Von den erhaltenen Mischungen wurden die für die Teste erforderlichen Formteile hergestellt und an diesen die in der Tabelle genannten Parameter bestimmt.

Tabelle

| Beispiel Nr. | A | Komponenten B Menge | B Art | C Menge | C Art | D Menge | D Art | E | Zugfestigkeit | Kerbschlagzähigkeit | Vicat-Temperatur |
|---|---|---|---|---|---|---|---|---|---|---|---|
| 1 | 50 | 50 | $B_1$ | 10 | $C_1$ | - | | - | 48 | 6 | 126 |
| 2 | 30 | 70 | $B_2$ | 10 | $C_2$ | - | | - | 53 | 8 | 119 |
| 3 | 50 | 50 | $B_1$ | 8 | $C_2$ | 10 | $D_1$ | - | 47 | 12 | 122 |
| 4 | 50 | 50 | $B_1$ | 5 | $C_1$ | - | | 10 | 52 | 8 | 118 |
| 5 | 40 | 60 | $B_3$ | 12 | $C_1$ | - | | - | 51 | 11 | 125 |
| 6 | 40 | 60 | $B_3$ | 8 | $C_2$ | - | | 10 | 54 | 13 | 120 |
| 7 | 60 | 40 | $B_4$ | 10 | $C_1$ | 5 | $D_2$ | - | 49 | 10 | 131 |
| 8 | 18 | 82 | $B_4$ | 15 | $C_1$ | - | | - | 53 | 7 | 116 |
| 9 | 34 | 64 | $B_3$ | 7 | $C_2$ | - | | - | 48 | 9 | 116 |
| 10 | 50 | 50 | $B_3$ | 5 | $C_2$ | 5 | $D_1$ | - | 48 | 10 | 127 |
| Vergleichsversuche | | | | | | | | | | | |
| I | 50 | 50 | $B_1$ | - | | - | | - | 32 | 0,9 | 106 |
| II | 30 | 70 | $B_2$ | - | | - | | - | 34 | 0,7 | 97 |
| III | 50 | 50 | $B_1$ | - | | - | | 10 | 31 | 2 | 103 |
| IV | 40 | 60 | $B_3$ | - | | - | | - | 26 | 3 | 104 |

## Ansprüche

1. Thermoplastische Formmasse, enthaltend
A 10 bis 90 Gew.-Teile mindestens eines Polyphenylenethers,
B 90 bis 10 Gew.-Teile mindestens eines Styrol und Acrylnitril enthaltenden Copolymerisates,
enthaltend ferner, bezogen auf 100 Gew.-Teile aus A + B
C 1 bis 50 Gew.-Teile mindestens einer weiteren Komponente,
dadurch gekennzeichnet, daß die weitere Komponente C ein Copolymerisat der allgemeinen Formel

$$A_n \left[ (O-\underset{O}{\overset{}{C}}-(CH_2)_6-O-)_Z R \right]_g$$

darstellt, in der bedeuten:
A = ein Polymerisat eines vinylaromatischen Monomeren aus der Gruppe von Styrol, den kernalkylierten Styrolen, den Seitenketten-alkylierten Styrolen oder Gemischen davon
n = Zahlenwerte von n = 5 bis 5000 (Polymerisationsgrad)
g = ganze Zahlen von 1 bis 4
Z = 10 bis 5000
R = Wasserstoff, Alkyl oder Acyl.

2. Formmasse nach Anspruch 1, dadurch gekennzeichnet, daß aus den Komponenten A, B und C besteht.

3. Formmasse nach Anspruch 1, dadurch gekennzeichnet, daß sie zusätzlich
D bis zu 30 Gew.-Teilen eines Kautschuks enthält.

4. Formmasse nach Anspruch 3, dadurch gekennzeichnet, daß sie zusätzlich
E bis zu 40 Gew.-Teilen einer weiteren Komponente enthält.

5. Formmasse nach Anspruch 1, dadurch gekennzeichnet, daß für das Blockcopolymere C in der allgemeinen Formal stehen
A für ein Polymer von ausschließlich Styrol
g für 1
Z für Werte von 100 bis 1000.

6. Formmasse nach Anspruch 1, dadurch gekennzeichnet, daß das Blockcopolymerisat C hergestellt worden ist durch Umsetzen von a) hydroxilgruppenhaltigen Polymerisaten $A_n\,(OH)_g$ mit einer metallorganischen Verbindung b) der allgemeinen Formel

$$R^1_l\, R^2_m\, R^3_p\, MeX_y$$

wobei
$R^1$, $R^2$ und $R^3$ gleich oder verschieden sein können und jeweils stehen für Alkyl-, Cycloalkyl-, Alkenyl-, Cycloalkenyl-, Aryl-Reste mit 1 bis 12 C-Atomen oder Kombinationen der vorstehenden Reste untereinander,
Me für $Mg^{2+}$ , $Zn^{2+}$ oder $Al^{3+}$ und wobei die Laufzahlen 1, m und n jeweils 0 oder 1 sein können und ferner gilt $\Sigma\ l+m+p = 1, 2$ oder 3 X für Chlor oder Brom und y = 0, 1 oder 2 sein kann, und A und g die in Anspruch 1 genannte Bedeutung haben).
in Gegenwart eines inerten Lösungsmittels bei Temperaturen von -20°C bis 120°C und Verweilzeiten von 1 Minute bis 5 Stunden unter an sich bekannten Scherbedingungen (Rühren) in Gegenwart von Inertgasen in einem Molverhältnis, bezogen auf die OH-Gruppen von a) ($A_{OH}$/b) von 1:1 bis 3:1 und unter anschließender Polymerisation von $\epsilon$-Caprolacton in Gegenwart des Umsetzungsproduktes (Polymerisationsinitiators) aus a) und b).

7. Verwendung von Formmassen gemäß Anspruch 1 zur Herstellung von Formteilen.

8. Formteile aus Formmassen gemäß Anspruch 1.